# EUROPEAN PATENT APPLICATION

(11) **EP 4 507 370 A1**
(43) Date of publication of application: **12.02.2025**
(21) Application number: 24192061.0
(22) Date of filing: 31.07.2024
(51) Int. Cl.: H04W 28/02

(54) **SYSTEMS AND METHODS FOR LATENCY REDUCTION**

(30) Priority: 10.08.2023 US 202363531917 P; 09.07.2024 US 202418767589
(71) Applicant: Meta Platforms Technologies, LLC, Menlo Park, CA 94025 (US)
(72) Inventor: Yu, Liwen, Menlo Park (US); Wong, Curt, Menlo Park (US); Ji, Zhu, Menlo Park (US); Lim, Suhwan, Menlo Park (US)
(74) Representative: Murgitroyd & Company

(57) **Abstract**

Systems and methods for protocol data unit (PDU) discard may include user equipment (UE) which receives, at a buffer of the LTE, a protocol data unit (PDU) for transmission to a base station. The UE may initiate a discard timer responsive to the PDU being received in the buffer. The UE may transmit, to the base station, a delay status report corresponding to the PDU, responsive to a remaining time for the discard timer satisfying a threshold criterion.

## Description

### FIELD OF DISCLOSURE

The present disclosure is generally related to wireless communication between devices, including but not limited to, systems and methods for latency reduction.

### BACKGROUND

Augmented reality (AR), virtual reality (VR), and mixed reality (MR) are becoming more prevalent, which such technology being supported across a wider variety of platforms and device. Some AR/VR/MR devices may communicate with other devices within an environment via various cellular connections or links.

### SUMMARY

In one aspect, there is provided a method. The method includes receiving, at a buffer of a user equipment (UE), a protocol data unit (PDU) for transmission to a base station. The method further includes initiating, by the UE, a discard timer responsive to the PDU being received in the buffer and transmitting, by the UE to the base station, a delay status report corresponding to the PDU, responsive to a remaining time for the discard timer satisfying a threshold criterion.

In some embodiments, the method may include receiving, by the UE, from the base station, an indication of resources allocated for transmitting the PDU. The method may include transmitting, by the UE, the PDU to the base station responsive to receiving the indication and prior to expiration of the discard timer. In some embodiments, the resources are allocated by the base station based at least in part on the delay status report. In some embodiments, the value for the discard timer is set based on a type of traffic carried in the PDU.

In some embodiments, the method includes discarding, by the UE, the PDU responsive to expiration of the discard timer. In some embodiments, the method includes determining, by the UE, a count of PDUs in the buffer for transmission to the base station. The method may include transmitting, by the UE, a buffer status report to the base station responsive to the count satisfying a threshold criterion. In some embodiments, the method includes transmitting, by the UE, a plurality of delay status reports for a plurality of PDUs in the buffer, responsive to remaining times of respective discard timers for the PDUs satisfying the threshold criterion.

In some embodiments, the threshold criterion is a first threshold criterion. The method may include determining, by the UE, that a value corresponding to the discard timer satisfies a second threshold criterion for transmitting delay status reports. The UE may transmit the delay status report corresponding to the PDU to the base station responsive to the value of the discard timer satisfying the second threshold criterion and the remaining time satisfying the first threshold criterion. In some embodiments, the method includes receiving, by the UE, a second PDU in the buffer for transmission to the base station. The method may include initiating, by the UE, a second discard timer responsive to the second PDU being received in the buffer. The method may include determining, by the UE, that a second value corresponding to the second discard timer fails to satisfy the second threshold criterion. The method may include forego transmission of, by the UE, any delay status reports corresponding to the second PDU.

In another aspect, there is provided a user equipment (UE) including a wireless transceiver, and one or more processors configured to receive, at a buffer of the UE, a protocol data unit (PDU) for transmission to a base station. The one or more processors are also configured to initiate a discard timer responsive to the PDU being received in the buffer and transmit, via the wireless transceiver to the base station, a delay status report corresponding to the PDU, responsive to a remaining time for the discard timer satisfying a threshold criterion.

In some embodiments, the one or more processors are further configured to receive, via the wireless transceiver from the base station, an indication of resources allocated for transmitting the PDU. The one or more processors may be configured to transmit, via the wireless transceiver to the base station, the PDU, responsive to receiving the indication and prior to expiration of the discard timer. In some embodiments, the resources are allocated by the base station based at least in part on the delay status report. In some embodiments, the value for the discard timer is set based on a type of traffic carried in the PDU. In some embodiments, the one or more processors are further configured to discard the PDU responsive to expiration of the discard timer.

In some embodiments, the one or more processors are further configured to determine a count of PDUs in the buffer for transmission to the base station. The one or more processors may be configured to transmit, via the wireless transceiver to the base station, a buffer status report responsive to the count satisfying a threshold criterion. In some embodiments, the one or more processors are further configured to transmit, via the wireless transceiver to the base station, a plurality of delay status reports for a plurality of PDUs in the buffer, responsive to remaining times of respective discard timers for the PDUs satisfying the threshold criterion.

In some embodiments, the threshold criterion is a first threshold criterion. The one or more processors may be configured to determine that a value corresponding to the discard timer satisfies a second threshold criterion for transmitting delay status reports. The UE may transmit the delay status report corresponding to the PDU to the base station responsive to the value of the discard timer satisfying the second threshold criterion and the remaining time satisfying the first threshold criterion. In some embodiments, the one or more processors are configured to receive a second PDU in the buffer for transmission to the base station. The one or more processors may be configured to initiate a second discard timer responsive to the second PDU being received in the buffer. The one or more processors may be configured to determine that a second value corresponding to the second discard timer fails to satisfy the second threshold criterion. The one or more processors may be configured to forego transmission of any delay status reports corresponding to the second PDU. In some embodiments, the one or more processors include one or more processors of a packet data convergence protocol (PDCP) layer of the UE.

In yet another aspect, there is provided a non-transitory computer readable medium storing instructions that, when executed by one or more processors of a user equipment (UE), cause the UE to receive, at a buffer of the UE, a protocol data unit (PDU) for transmission to a base station. The instructions cause the UE to initiate a discard timer responsive to the PDU being received in the buffer and transmit, via a wireless transceiver to the base station, a delay status report corresponding to the PDU, responsive to a remaining time for the discard timer satisfying a threshold criterion.

In some embodiments, the threshold criterion is a first threshold criterion. The instructions may further cause the UE to determine that a value corresponding to the discard timer satisfies a second threshold criterion for transmitting delay status reports. The may UE transmit the delay status report corresponding to the PDU to the base station according to the value of the discard timer satisfying the second threshold criterion and the remaining time satisfying the first threshold criterion.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of an example wireless communication system, according to an example implementation of the present disclosure.
FIG. 2 is a diagram of a console and a head wearable display for presenting augmented reality or virtual reality, according to an example implementation of the present disclosure.
FIG. 3 is a diagram of a head wearable display, according to an example implementation of the present disclosure.
FIG. 4 is a block diagram of a computing environment according to an example implementation of the present disclosure.
FIG. 5 is a block diagram of a system for latency reduction, according to an example implementation of the present disclosure.
FIG. 6 is a flowchart showing an example method of managing PDUs, according to an example implementation of the present disclosure.
FIG. 7 is a flowchart showing an example method of PDU delay status reporting, according to an example implementation of the present disclosure.
FIG. 8 is a flowchart showing an example method of resource allocation according to status reporting from a UE, according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

Referring generally to the figures, the systems and methods described herein relate to latency reduction. The systems and methods described herein may perform delay status reporting for latency sensitive traffic, such as extended reality (XR) traffic. In various implementations, scheduling of uplink data by a network may leverage buffer status reports from a UE which are available at the network, to ensure that the air interface resources are efficiently utilized. On top of the buffer status, some implementations may involve a UE sharing delay status information, such that the network can prioritize latency-sensitive traffic. Uplink extended reality traffic can have varying characteristics based on the types of applications or services. For example, periodic traffic, such as video, audio, avatar, pose, or control information may require timely delivery. Traffic, such as user inputs, may not have stringent timing requirements. Latency-sensitive traffic may benefit most from reporting delay status to a network.

According to the systems and methods described herein, traffic flow selection and delay reporting conditions may improve uplink latency-sensitive extended reality traffic performance while controlling reporting overhead. Reporting delay status for all traffic types may not be efficient and may cause excessive signaling overhead. According to the systems and methods described herein, user equipment may perform delay status reporting for selected traffic with stringent latency requirements. In various embodiments, the selection of traffic for delay status reporting may be based on a discard timer value, such as based on packet data convergence protocol (PDCP) discard timer value. For example, if the PDCP discard timer value is smaller than a defined threshold time, the delay status reporting may be enabled. Such a selection criteria may ensure that traffic with low latency requirements may report the delay status of the corresponding traffic. Accordingly, for selected traffic flows, delay status reporting may be triggered when reporting conditions are met. For example, if the remaining time of a discard timer falls under a predetermined remaining threshold time, a device may trigger sending a delay status report. Such an on-demand delay status reporting may ensure that reporting is triggered when a low-latency traffic flow has been in a buffer for an extended duration and is experiencing delays in transmission. Upon receiving a delay status report, the network may respond by, e.g., prioritizing resources for the corresponding traffic flow, which in turn improves latency performance of the traffic flow.

In various embodiments of the present solution, a user equipment (UE) may receive a protocol data unit (PDU) in a buffer for transmission to a base station. The UE may initiate a discard timer responsive to the PDU being received in the buffer. The UE may transmit, via the wireless transceiver to the base station, a delay status report corresponding to the PDU, responsive to a remaining time for the discard timer satisfying a threshold criterion. According to the systems and methods described herein, when low latency traffic flows experience delays, the delay status report may help the network allocate resources to improve latency performance of the corresponding flow, while controlling signaling overhead. Such implementations and embodiments can improve the efficiency of resource allocation by a base station, limit latency, and provide better support for XR applications or resources.

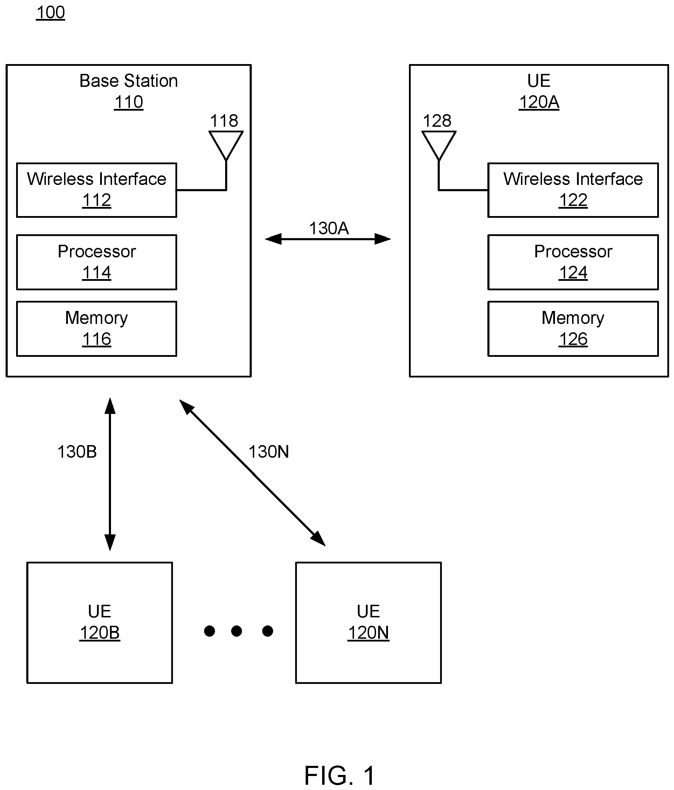

FIG. 1 illustrates an example wireless communication system 100. The wireless communication system 100 may include a base station 110 (also referred to as "a wireless communication node 110" or "a station 110") and one or more user equipment (UEs) 120A, 120B, 120N (also referred to as "wireless communication devices 120" or "terminal devices 120"). The base station 110 and the UEs 120A, 120B, 120N may communicate through wireless commination links 130A, 130B, 130N. The wireless communication link 130A, 130B, 130N may be a cellular communication link conforming to 3G, 4G, 5G or other cellular communication protocols or a Wi-I communication protocol. In one example, the wireless communication link 130A, 130B, 130N supports, employs or is based on an orthogonal frequency division multiple access (OFDMA). In one aspect, the UEs 120A, 120B, 120N are located within a geographical boundary with respect to the base station 110, and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

In some embodiments, the UE 120A, 120B, 120N may be a user device such as a mobile phone, a smart phone, a personal digital assistant (PDA), tablet, laptop computer, wearable computing device, etc. Each UE 120A, 120B, 120N may communicate with the base station 110 through a corresponding communication link 130A, 130B, 130C. For example, the UE 120A, 120B, 120N may transmit data to a base station 110 through a wireless communication link 130A, 130B, 130C, and receive data from the base station 110 through the wireless communication link 130A, 130B, 130C. Example data may include audio data, image data, text, etc. Communication or transmission of data by the UE 120A, 120B, 120N to the base station 110 may be referred to as an uplink communication. Communication or reception of data by the UE 120A, 120B, 120N from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120A may include an electronic display and/or an input device. For example, the UE 120A may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126, and executes the instructions. In one aspect, the processor 124 may receive downconverted data at the baseband frequency from the wireless interface 122, and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency, and encode or process the data. For example, the processor 124 may encode or process image data or audio data at the baseband frequency, and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the UEs 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120A, 120B, 120C. Additionally or alternatively, the base station 110 may provide data to another UE 120A, 120B, 120C, another base station, or another communication device. Hence, the base station 110 allows communication among UEs 120A, 120B, 120C associated with the base station 110, or other UEs associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120A through a wireless communication link 130A. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116, and executes the instructions. In one aspect, the processor 114 may receive downconverted data at the baseband frequency from the wireless interface 112, and decode or process the downconverted data. For example, the processor 114 may generate audio data or image data according to the downconverted data. In one aspect, the processor 114 may generate or obtain data for transmission at the baseband frequency, and encode or process the data. For example, the processor 114 may encode or process image data or audio data at the baseband frequency, and provide the encoded or processed data to the wireless interface 112 for transmission. In one aspect, the processor 114 may set, assign, schedule, or allocate communication resources for different UEs 120A, 120B, 120C. For example, the processor 114 may set different modulation schemes, time slots, channels, frequency bands, etc. for UEs 120A, 120B, 120C to avoid interference. The processor 114 may generate data (or UL CGs) indicating configuration of communication resources, and provide the data (or UL CGs) to the wireless interface 112 for transmission to the UEs 120A, 120B, 120C.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120A, 120B, 120C is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

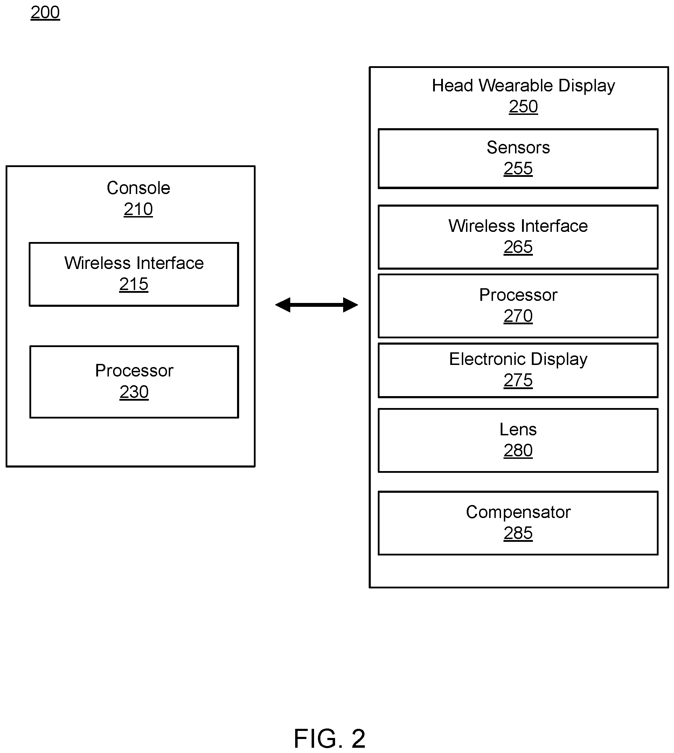

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120. The HWD 250 may be referred to as, include, or be part of a head mounted display (HMD), head mounted device (HMD), head wearable device (HWD), head worn display (HWD) or head worn device (HWD). The HWD 250 may detect its location and/or orientation of the HWD 250 as well as a shape, location, and/or an orientation of the body/hand/face of the user, and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality, and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250, and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement, and determine an orientation and location of the HWD 250. In one aspect, the sensors 255 can detect the translational movement and the rotational movement with respect to a previous orientation and location of the HWD 250, and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye, and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image, and render the image to display through the electronic display 275. In some embodiments, the image data from the console 210 may be encoded, and the processor 270 may decode the image data to render the image. In some embodiments, the processor 270 receives, from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements, and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275, and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250, and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space, and determines a view of the artificial reality space along a direction corresponding to the mapped orientation from the mapped location in the artificial reality space. The processor 230 may generate image data describing an image of the determined view of the artificial reality space, and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image, and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250, and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

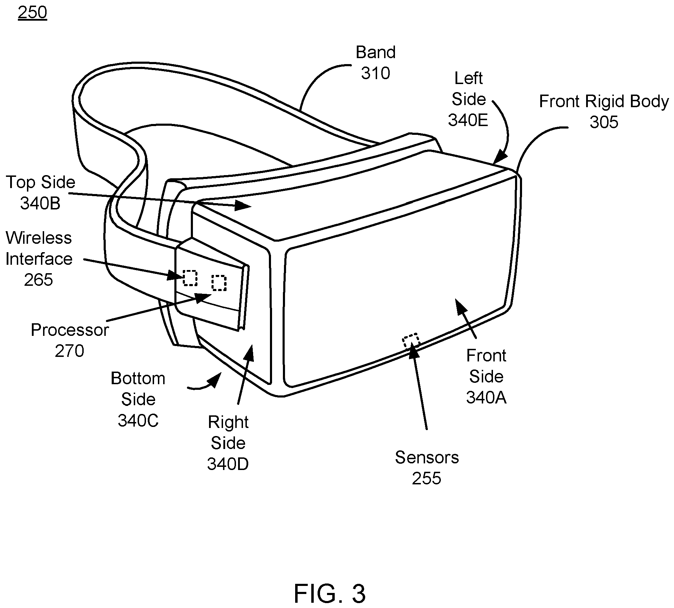

FIG. 3 is a diagram of a HWD 250, in accordance with an example embodiment. The HWD may comprise a front side 340A, a top side 340B, a bottom side 340C, a right side 340D and a left side 340E. In some embodiments, the HWD 250 includes a front rigid body 305 and a band 310. The front rigid body 305 includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205, and may not be visible externally. In other embodiments, the HWD 250 has a different configuration than shown in FIG. 3. For example, the wireless interface 265, the processor 270, and/or the sensors 255 may be in different locations than shown in FIG. 3.

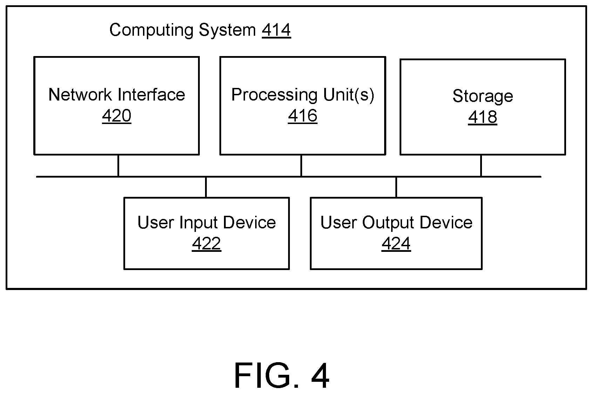

Various operations described herein can be implemented on computer systems. FIG. 4 shows a block diagram of a representative computing system 414 usable to implement the present disclosure. In some embodiments, the source devices 110, the sink device 120, the console 210, the HWD 250 are implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as WIFi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

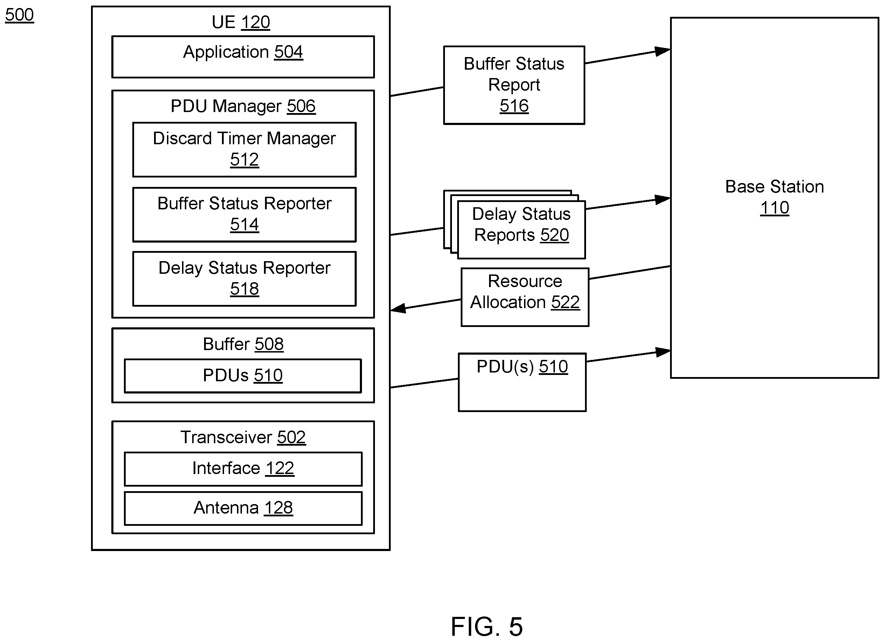

Referring now to FIG. 5, depicted is a block diagram of a system 500 for latency reduction, according to an example implementation of the present disclosure. The system 500 may include user equipment (UE) 120 communicably coupled to a base station 110. The UE 120 and base station 110 may be the same as or similar to the UE 120 and base station 110 described above with reference to FIG. 1. The UE 120 may include a transceiver 502, which may be or include an interface 122 and an antenna 128, which may be the same as or similar to the interface 122 and antenna 128 described above with reference to FIG. 1. The transceiver 502 may be configured to facilitate wireless communication between the UE 120 and base station 110. While shown as included on the UE 120, it is noted that the base station 110 may similarly include a transceiver 502 including an interface and antenna (e.g., similar to the interface 112 and antenna 118 described above with reference to FIG. 1).

The UE 120 may be configured to execute, deploy, or otherwise provide an application 504. In various embodiments, the application 504 may be an extended reality (XR) application (e.g., an augmented reality (AR), virtual reality (VR), mixed reality (MR), or other XR application). The application 504 executing on the UE 120 may generate data for transmission to a remote location or endpoint, such as a server, another device or UE 120, etc. (and vice versa). The UE 120 may be configured to transmit the data (e.g., via the transceiver 502) along a network path to the endpoint or destination (e.g., to the server or UE 120). As described in greater detail below, the generated data may be temporarily stored in a buffer 508 as protocol data units (PDUs) 510, for transmission along the network path to the endpoint / destination.

The UE 120 may include a PDU manager 506. The PDU manager 506 may be or include any device, component, element, or hardware designed or configured to implement, deploy, use, or otherwise manage PDUs 510 which are maintained in the buffer 508. In some embodiments, the PDU manager 506 may be executed or provided at a packet data convergence protocol (PDCP) layer of the UE 120. For example, the PDU manager 506 may be configured to receive data which is generated at the application layer of the UE 120 (e.g., responsive to, as part of, or in connection with execution or support of the application 504), and the PDU manager 506 may be configured to generate / assemble / provide the PDUs 510 for transmission via the transceiver 502 to the base station 110. Prior to their transmission, the PDU manager 506 may be configured to store or maintain the PDUs 510 in the buffer 508.

The PDU manager 506 may include a discard timer manager 512, a buffer status reporter 514, and a delay status reporter 518. The discard timer manager 512 may be configured to manage discard timers for each of the PDUs 510 which are included in the buffer 508. As described in greater detail below, the buffer status reporter 514 may be configured to generate buffer status report(s) 516 for transmission to the base station 110 based on or according to a count / volume / number of PDUs 510 in the buffer 508, and the delay status report 518 may be configured to generate delay status report(s) 520 for PDUs 510 in the buffer 508.

The discard timer manager 512 may be configured to determine, identify, configure, or otherwise select a value for a discard timer to use for a PDU 510. The value may be or include a maximum amount of time in which the PDU 510 is to be maintained in the buffer 508 prior to discarding the PDU 510 (e.g., purging the PDU 510 from the buffer 508 without transmitting to the base station 110). In some embodiments, the discard timer manager 512 may be configured to select the value for the discard timer based on or according to a traffic type of data / information / traffic which is included in the PDU 510. For example, the discard timer manager 512 may be configured to set / determine / select a lower value for latency-sensitive traffic (e.g., because such traffic may be stale after a shorter duration), but may select a higher value for high data rate traffic or high importance traffic. Examples of traffic types, characteristics, and corresponding values for discard timers is provided in Table 1 below. It is noted that, while these timer values are provided, the present disclosure is not limited to the timer values provided in Table 1.

**Table 1. Example Discard Timer Values for Traffic Types**

| Characteristics | Example Traffic Types | Timer Value (ms) |
|---|---|---|
| High Data Rate | Video Streaming, Large File Transfers, High-Resolution Gaming | 120 |
| High Importance (Reliability) | Real-Time Gaming, Interactive Media, Financial Trading Platform Traffic, Autonomous Vehicles, Emergency Communication Services | 150 |
| Low Latency | Voice over IP, Video Conferencing, Remote Desktop Services, Control Traffic | 100 |

Upon a PDU 510 being stored in the buffer 508, the discard timer manager 512 may start, commence, trigger, or otherwise initiate a discard timer (e.g., a PDCP discard timer) for the PDU 510 stored in the buffer 508. In this regard, each of the PDUs 510 stored in the buffer 508 may have a corresponding discard timer - with a respective value set / determined / selected according to the traffic included in the PDU 510 - measuring a duration in which the PDU 510 has been stored / maintained in the buffer 508.

The buffer status reporter 514 may be designed or configured to identify, assess, measure, quantify, or otherwise determine volume of traffic stored in the buffer 508 (e.g., ready for transmission to the base station 110). In some embodiments, the buffer status reporter 514 may be configured to determine the volume of traffic stored in the buffer 508 based on or according to a count of the PDUs 510 stored in the buffer 508. For example, the buffer status reporter 514 may be configured to maintain a counter which is increased as new PDUs 510 are stored in the buffer 508, and can be decreased as PDUs 510 are removed from the buffer 508 (e.g., either through discarding the PDUs 510 or through transmission to the base station 110). In some embodiments, the buffer status reporter 514 may be configured to determine a volume of traffic in the buffer 508 based on a volume of data contained in the PDUs 510 stored in the buffer. For example, the buffer status reporter 514 may be configured to measure, detect, or otherwise determine a volume of data (e.g., in bytes) included in the PDUs 510 which are stored in the buffer 508 for transmission to the base station 110. Similar to the counter described above, the buffer status reporter 514 may be configured to increase the volume of data as new PDUs 510 are added to the buffer 508 and/or decrease the volume of data as PDUs 510 are removed from the buffer 508 (e.g., due to discarding the PDUs 510 from the buffer 508 or responsive to transmission of the PDUs 510 to the base station 110).

The buffer status reporter 514 may be configured to determine, produce, or otherwise generate a buffer status report 516 based on the volume of traffic in the buffer 508. For example, the buffer status reporter 514 may be configured to generate the buffer status report 516 responsive to the volume of traffic satisfying a threshold criterion (e.g., the volume of data in the buffer 508 being greater than or equal to a threshold volume in bytes, a number / count of PDUs 510 in the buffer 508 being greater than or equal to a threshold number of PDUs, and so forth). The buffer status reporter 514 may be configured to generate the buffer status report 516 to identify, provide, or otherwise indicate the volume of traffic in the buffer 508 to the base station 110. The buffer status reporter 514 may be configured to provide the buffer status report 516 for transmission (e.g., via the transceiver 502) to the base station 110.

The delay status reporter 518 may be designed or configured to identify, assess, measure, quantify, or otherwise determine a duration in which PDUs 510 are maintained in the buffer 508. In some embodiments, the delay status reporter 518 may be configured to selectively determine the duration in which the PDUs 510 are maintained in the buffer 508. For example, the delay status reporter 518 may be configured to determine duration in which the PDUs 510 are maintained in the buffer 508 for a subset of PDUs 510. The delay status reporter 518 may be configured to select, determine, or otherwise identify the subset of PDUs 510 in which to measure the duration in which the PDUs 510 are maintained in the buffer 508, based on the discard timer value selected by the discard timer manager 512 for the PDU 510. For instance, the delay status reporter 518 may be configured to apply the discard timer value selected by the discard timer manager 512 to a threshold criterion, to determine which of the PDUs 510 to monitor for delayed status reporting. For example, the threshold criterion may be that the discard timer value is less than or equal to a predetermined number of milliseconds (e.g., the discard timer value ≤ 100 ms). The discard timer manager 512 may be configured to monitor the discard timer for the PDUs 510 having a discard timer value which satisfies the threshold criterion.

The delay status reporter 518 may be configured to establish, produce, create, or otherwise generate delay status reports 520 for PDUs 510 (e.g., of the subset of PDUs 510 whose discard timer are being monitored) based on a remaining time for the discard timer. In some embodiments, the delay status reporter 518 may be configured to generate a delay status report 520 for a PDU 510, responsive to the remaining time (e.g., indicated by the discard timer) satisfying a threshold criterion. For example, the delay status reporter 518 may trigger generation of the delay status report 520 for a PDU 510 responsive to remaining time reaching a threshold time (e.g., 30 ms remaining, 50 ms remaining, and so forth). The delay status reporter 518 may be configured to compare the remaining time to the threshold (e.g., 20 ms, 30 ms, 40 ms, 50 ms and so forth). The delay status reporter 518 may be configured to generate the delay status report 520 responsive to the remaining time satisfying the threshold (e.g., the remaining time being less than or equal to the threshold).

In this regard, the delay status reporter 518 may be configured to generate delay status report(s) 520 for a limited number of PDUs 510, where the number of delay status reports 520 are limited to the number of PDUs 510 which are being monitored (e.g., based on the discard timer value satisfying a first threshold criterion) and, of those PDUs 510 which are being monitored, those which have a remaining time that satisfy a second threshold criterion (e.g., the remaining time being less than or equal to a second threshold). As one example, the delay status reporter 518 may limit monitoring of discard timers for PDUs 510 which are latency-sensitive (e.g., having a discard timer value which is less than or equal to 100 ms), and generate delay status reports 520 for those PDUs 510 which are being monitored and have a remaining time which satisfy a reporting threshold (e.g., remaining time is less than or equal to 50 ms). Such implementations may reduce signaling overhead, while promoting resource allocation to latency-sensitive traffic.

The delay status reporter 518 may be configured to communicate, send, provide, or otherwise transmit the delay status report(s) 520 for the subset of PDU(s) 510 which satisfy both threshold criteria to the base station 110. The delay status report(s) 520 may indicate, identify, or otherwise provide information relating to PDUs 510 which are set to be discarded within a predetermined duration (e.g., the remaining time).

The base station 110 may be configured to receive the delay status report(s) 520 (and any buffer status report(s) 516) from the UE 120, and can allocate resource(s) 522 based on or according to the reports 516, 520. For example, the base station 110 may be configured to allocate additional resource(s) 522 to the UE 120, responsive to receiving the delay status report(s) 520 and buffer status report 516 indicating reduced throughput of the UE 120, to increase throughput and reduce latency. The base station 110 may allocate additional resource(s) 522 by increasing a bandwidth of channels allocated to the UE 120, increase scheduled timeslots for transmission of uplink resources by the UE 120, and so forth.

The PDU manager 506 may be configured to control / manage PDUs 510 in the buffer according to the allocated resources 522 from the base station 110. The PDU manager 506 may be configured to purge, remove, or otherwise discard PDUs 510 from the buffer 508 responsive to expiration of the discard timer for the respective PDUs 510. The PDU manager 506 may be configured to control the transceiver 502 to transmit PDUs 510 (e.g., from the buffer 508) to the base station 110. In some embodiments, the PDU manager 506 may be configured to transmit the PDUs 510 (e.g., via the transceiver) according to a first-in-first-out rules-based transmission scheme. In some embodiments, the PDU manager 506 may be configured to transmit the PDUs 510 (e.g., via the transceiver) according to a priority of the PDUs 510 in the buffer 508. In some embodiments, the PDU manager 506 may be configured to transmit the PDUs 510 (e.g., via the transceiver) according to the remaining time for the discard timer of the respective PDUs 510 (e.g., to transmit the PDUs 510 prior to expiration of the discard timer and resultant discarding of the PDUs 510).

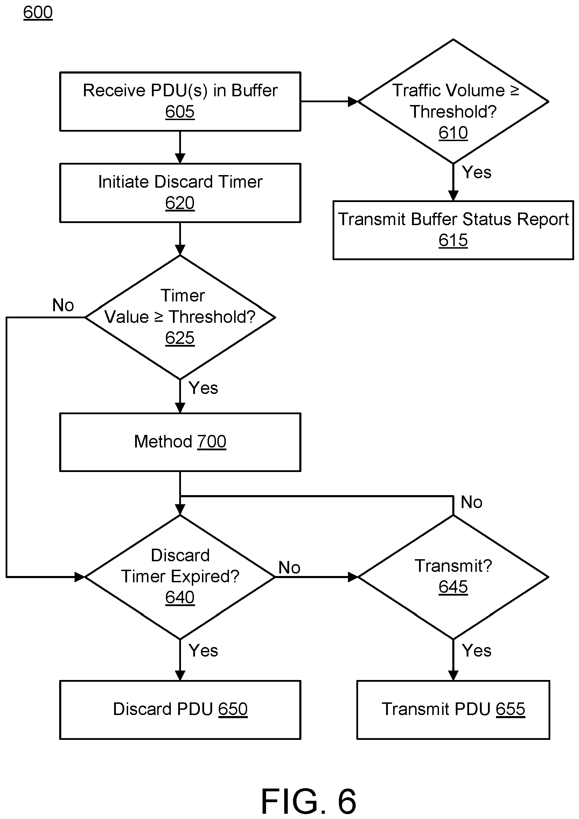

Referring now to FIG. 6, depicted is a flowchart showing an example method 600 of managing PDUs, according to an example implementation of the present disclosure. The method 600 may be performed or executed by the devices, components, elements, or hardware described above with reference to FIG. 1 - FIG. 5, such as the UE 120 and/or the PDU manager 506. As a brief overview, at step 605, a UE may receive PDUs in a buffer. At step 610, the UE may determine whether a traffic volume is greater than or equal to a threshold. At step 615, the UE may transmit a buffer status report. At step 620, the UE may initiate a discard timer. At step 625, the UE may determine whether a discard timer value is greater than or equal to a threshold. At step 630, the UE may determine whether the remaining time is less than or equal to a threshold. At step 635, the UE may transmit a delay status report. At step 640, the UE may determine whether the discard timer has expired. At step 645, the UE may determine whether to transmit the PDU. At step 650, the UE may discard the PDU. At step 655, the UE may transmit the PDU.

At step 605, a UE may receive PDUs in a buffer. In some embodiments, the UE may receive one or more PDUs in a buffer for transmission via a cellular network to an endpoint. The UE may receive the PDU(s) in the buffer, responsive to the UE generating the PDU(s) at an application layer. In some embodiments, a processor of a PDCP layer of the UE may receive the the PDUs of the buffer, responsive to the corresponding traffic being generated at the application layer as part of, in connection with, or in support of an application executed or provided by the UE. The UE may receive the PDUs in the buffer following generation of the corresponding traffic, and prior to the PDUs being sent via the cellular network to a base station (e.g., for transmission to the endpoint.

At step 610, the UE may determine whether a traffic volume is greater than or equal to a threshold. In some embodiments, the UE may determine whether the traffic volume in the buffer (e.g., waiting) for transmission to the base station is greater than a buffer status report threshold. The UE may determine the traffic volume based on a data volume (e.g., in bytes) of data / traffic / PDUs in the buffer. The UE may determine the traffic volume based on a count of PDUs in the buffer. The UE may compare the traffic volume to the buffer status report threshold. Where, at step 610, the traffic volume satisfies the buffer status report threshold (e.g., is greater than or equal to the buffer status report threshold), the method 600 may proceed to step 615, where the UE may transmit a buffer status report. The UE may transmit the buffer status report to the base station. The UE may transmit the buffer status report to the base station, to indicate, identify, or otherwise provide information relating to the volume of traffic which is ready to be sent uplink to the base station.

At step 620, the UE may initiate a discard timer. In some embodiments, the UE may start, establish, commence, begin, trigger, or otherwise initiate a discard timer for a PDU, responsive to the PDU being received in the buffer. In this regard, step 620 may be performed in parallel with steps 610 - 615, and responsive to step 605. The UE may initiate the discard timer, to measure an amount of time or duration in which a given PDU has been in the buffer ready for transmission for the base station. The discard timer may be a PDCP discard timer. In some embodiments, the UE may initiate the discard timer, to countdown from a discard timer value. The discard timer value may correspond to traffic which is included in the PDU. For example, a first PDU which is in the buffer may have a first discard value, which is different than a discard value for a second PDU in the buffer. The discard timer value may be set or defined based on the traffic type. For instance, the discard timer value may be set to a lower value for latency-sensitive traffic.

At step 625, the UE may determine whether a discard timer value is greater than or equal to a threshold. In some embodiments, the UE may determine whether the discard timer value for the discard timer initiated for a particular PDU (e.g., at step 620) satisfies a delay status reporting threshold. The delay status reporting threshold may be set, defined, or otherwise established to reduce signaling overhead while still reporting delays of PDUs in the buffer, particularly for latency-sensitive traffic. For example, the delay status reporting threshold may be 100 ms, though other delay status reporting thresholds may be set, predefined, established, etc., according to various use cases. The UE may compare the discard timer value to the delay status reporting threshold. Where the discard timer value satisfies the delay status reporting threshold (e.g., is less than or equal to the delay status reporting threshold), the method 600 may proceed to method 700, described below. Where the discard timer value does not satisfy the delay status reporting threshold (e.g., is greater than or equal to the delay status reporting threshold), the method 600 may proceed to step 640.

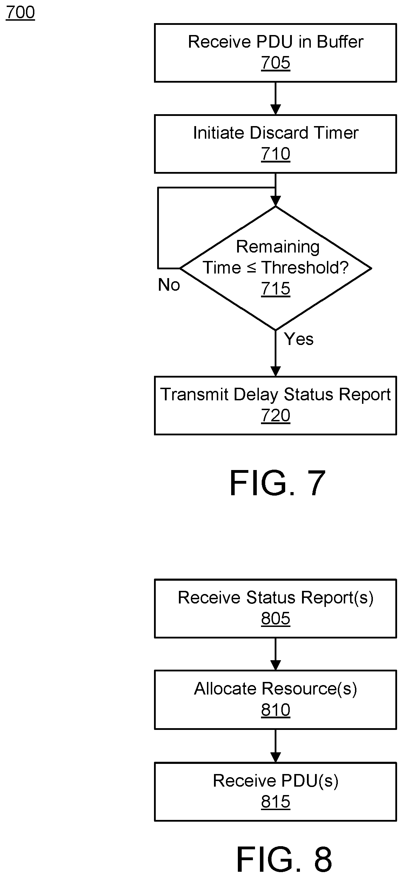

Referring to FIG. 7, with continued reference to FIG. 6, depicted in FIG. 7 is a flowchart showing an example method 700 of PDU delay status reporting, according to an example implementation of the present disclosure. As described above, where the discard timer value satisfies the delay status reporting threshold, the method 700 described herein may be executed. As a brief overview, at step 705, a UE may receive a PDU in a buffer. At step 710, the UE may initiate a discard timer. At step 715, the UE may determine whether a remaining time for the discard timer satisfies a threshold. At step 720, the UE may transmit a delay status report.

At step 705, a UE may receive a PDU in a buffer, and at step 710, the UE may initiate a discard timer. Steps 705 and 710 may be the same as or similar to steps 605 and 620, respectively, described above. At step 715, the UE may determine whether a remaining time for the discard timer satisfies a threshold. In some embodiments, the UE may compare the remaining time for the discard timer, for those PDUs which satisfy the delay status reporting threshold and are thus being monitored, to a reporting threshold. The reporting threshold may be or include a remaining time or duration in which to trigger sending / transmitting a delay status report. The reporting threshold may be, for example, 20 ms, 30 ms, 40 ms, 50 ms, etc. The method 700 may loop on step 715 while the remaining time for a given discard timer of a respective PDU is greater than the reporting threshold. When the remaining time satisfies the reporting threshold (e.g., is less than or equal to the reporting threshold), the method 700 may proceed to step 720.

At step 720, the UE may transmit a delay status report. In some embodiments, the UE may transmit a delay status report for a given PDU in the buffer, responsive to the remaining time for the discard timer satisfying a threshold criterion (e.g., the remaining time being less than or equal to the reporting threshold). In some embodiments, the UE may execute the method 700 for each of the PDUs in the buffer having a discard timer value which satisfy the delay status reporting threshold. The UE may generate delay status reports for each (or any) of the PDUs which are being monitored, responsive to the remaining time for those respective PDUs satisfying the threshold criterion. In this regard, particularly in reduced throughput / network congestion scenarios, the UE may generate multiple delay status reports for multiple PDUs, and may also generate buffer status report(s) (e.g., in parallel).

Referring back to FIG. 6, at step 640, the UE may determine whether the discard timer has expired. The UE may determine whether the discard timer for a given PDU (e.g., set / initiated at step 620) has expired. For example, the UE may determine that the discard timer has expired responsive to the discard timer reaching zero remaining time (e.g., if the discard timer executes a countdown from the discard timer value set for the PDU). As another example, the UE may determine that the discard timer has expired responsive to the discard timer reaching the discard timer value (e.g., if the discard timer measures a positive duration from a start time, or zero time, in which the PDU is received / stored in the buffer). Where, at step 640, the UE determines that the discard timer has not expired, the method 600 may proceed to step 645.

At step 645, the UE may determine whether to transmit the PDU. The UE may determine whether to transmit the PDU based on or according to the resources allocated by the base station. For example, the UE may determine whether to transmit a target PDU based on whether an uplink slot is available for transmission of the target PDU, and/or whether any higher-priority PDUs are in the buffer which should be transmitted ahead of the target PDU. Where, at step 645, the UE determines not to transmit the PDU, the method 600 may loop back to step 640. In this regard, the UE may loop between steps 640 and 645 until either, at step 640, the discard timer expires (e.g., where, at step 650, the UE discards the PDU) or, at step 645, the UE determines to transmit the PDU (e.g., where, at step 655, the UE transmits the PDU to the base station).

Referring now to FIG. 8, depicted is a flowchart showing an example method 800 of resource allocation according to status reporting from a UE, according to an example implementation of the present disclosure. Similar to the method 800 may be performed or executed by the devices, components, elements, or hardware described above with reference to FIG. 1 - FIG. 5, such as the base station 110. As a brief overview, at step 805, a base station may receive one or more status reports. At step 810, the base station may allocate resources. At step 815, the base station may receive PDU(s).

At step 805, a base station may receive one or more status reports. In some embodiments, the base station may receive one or more status reports from one or more UEs. The base station may receive the status report(s) responsive to a respective UE executing the methods 600, 700 described above with reference to FIG. 6 and FIG. 7. The status reports may be or include buffer status reports and/or delay status reports. In some embodiments, the base station may receive one (e.g., singular) buffer status report from a UE (e.g., responsive to the UE executing method 600 and the volume of traffic satisfying the threshold criterion at step 610), and may receive any number of delay status reports from the UE (e.g., responsive to the UE executing method 700 on a per-PDU basis). Additionally, the base station may receive any number of status reports (e.g., buffer status reports and/or delay status report(s)) from any number of UEs.

At step 810, the base station may allocate resources. In some embodiments, the base station may allocate resources to each of the UEs which the base station is serving, based at least on the status report(s) received at step 805. For example, the base station may allocate additional network resources to UEs which have transmitted status reports to the base station indicating reduced throughput. The base station may allocate additional network resources by, for example, increasing a bandwidth of channels used by the UE, increasing scheduled uplink slots for the UE, etc. At step 815, the base station may receive PDU(s). The base station may receive the PDU(s) from the UEs which the base station is serving. In some embodiments, the base station may receive PDUs from the UEs, responsive to the UE(s) executing the method 600 and determining to transmit the PDU(s) at step 645.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence has any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A method, comprising:
receiving, at a buffer of a user equipment (UE), a protocol data unit (PDU) for transmission to a base station;
initiating, by the UE, a discard timer responsive to the PDU being received in the buffer; and
transmitting, by the UE to the base station, a delay status report corresponding to the PDU, responsive to a remaining time for the discard timer satisfying a threshold criterion.

2. The method of claim 1, further comprising:
receiving, by the UE, from the base station, an indication of resources allocated for transmitting the PDU; and
transmitting, by the UE, the PDU to the base station responsive to receiving the indication and prior to expiration of the discard timer; and optionally
wherein the resources are allocated by the base station based at least in part on the delay status report.

3. The method of claim 1 or 2, wherein the value for the discard timer is set based on a type of traffic carried in the PDU.

4. The method of any preceding claim, further comprising one or more of:
(i) discarding, by the UE, the PDU responsive to expiration of the discard timer;
(ii) determining, by the UE, a count of PDUs in the buffer for transmission to the base station; and
transmitting, by the UE, a buffer status report to the base station responsive to the count satisfying a threshold criterion; and/or
(iii) transmitting, by the UE, a plurality of delay status reports for a plurality of PDUs in the buffer, responsive to remaining times of respective discard timers for the PDUs satisfying the threshold criterion.

5. The method of any preceding claim, wherein the threshold criterion is a first threshold criterion, the method further comprising determining, by the UE, that a value corresponding to the discard timer satisfies a second threshold criterion for transmitting delay status reports,
wherein the UE transmits the delay status report corresponding to the PDU to the base station responsive to the value of the discard timer satisfying the second threshold criterion and the remaining time satisfying the first threshold criterion.

6. The method of claim 5, further comprising:
receiving, by the UE, a second PDU in the buffer for transmission to the base station;
initiating, by the UE, a second discard timer responsive to the second PDU being received in the buffer;
determining, by the UE, that a second value corresponding to the second discard timer fails to satisfy the second threshold criterion; and
forego transmission of, by the UE, any delay status report corresponding to the second PDU.

7. A user equipment (UE), comprising:
a wireless transceiver; and
one or more processors configured to:
receive, at a buffer of the UE, a protocol data unit (PDU) for transmission to a base station;
initiate a discard timer responsive to the PDU being received in the buffer; and
transmit, via the wireless transceiver to the base station, a delay status report corresponding to the PDU, responsive to a remaining time for the discard timer satisfying a threshold criterion.

8. The UE of claim 7, wherein the one or more processors are further configured to:
receive, via the wireless transceiver from the base station, an indication of resources allocated for transmitting the PDU; and
transmit, via the wireless transceiver to the base station, the PDU, responsive to receiving the indication and prior to expiration of the discard timer.

9. The UE of claim 7 or 8, wherein the resources are allocated by the base station based at least in part on the delay status report.

10. The UE of any one of claims 6 to 8, wherein the value for the discard timer is set based on a type of traffic carried in the PDU.

11. The UE of any one of claims 7 to 10, wherein the one or more processors are further configured to do one or more of:
(i) discard the PDU responsive to expiration of the discard timer;
(ii) determine a count of PDUs in the buffer for transmission to the base station; and
transmit, via the wireless transceiver to the base station, a buffer status report responsive to the count satisfying a threshold criterion; and/or
(iii) transmit, via the wireless transceiver to the base station, a plurality of delay status reports for a plurality of PDUs in the buffer, responsive to remaining times of respective discard timers for the PDUs satisfying the threshold criterion.

12. The UE of any one of claims 6 to 11, wherein the threshold criterion is a first threshold criterion, and wherein the one or more processors are further configured to determine that a value corresponding to the discard timer satisfies a second threshold criterion for transmitting delay status reports,
wherein the UE transmits the delay status report corresponding to the PDU to the base station responsive to the value of the discard timer satisfying the second threshold criterion and the remaining time satisfying the first threshold criterion.

13. The UE of claim 12, wherein the one or more processors are configured to:
receive a second PDU in the buffer for transmission to the base station;
initiate a second discard timer responsive to the second PDU being received in the buffer;
determine that a second value corresponding to the second discard timer fails to satisfy the second threshold criterion; and
forego transmission of any delay status reports corresponding to the second PDU.

14. The UE of any one of claims 6 to 13, wherein the one or more processors comprise one or more processors of a packet data convergence protocol (PDCP) layer of the UE.

15. A non-transitory computer readable medium storing instructions that, when executed by one or more processors of a user equipment (UE), cause the UE to:
receive, at a buffer, a protocol data unit (PDU) for transmission to a base station;
initiate a discard timer responsive to the PDU being received in the buffer; and
transmit, via a wireless transceiver to the base station, a delay status report corresponding to the PDU, responsive to a remaining time for the discard timer satisfying a threshold criterion.
